# EUROPÄISCHE PATENTSCHRIFT

(11) **EP 1 147 985 B1**
(45) Veröffentlichungstag und Bekanntmachung des Hinweises auf die Patenterteilung: **17.11.2004**
(21) Anmeldenummer: 01109248.3
(22) Anmeldetag: 14.04.2001
(51) Int. Cl.: B64C 9/24, B64C 21/04, B64C 23/00, B64D 15/04, B64C 3/46

(54) **Anordnung zur aerodynamischen Lärmminderung von Vorflügeln eines Verkehrsflugzeuges**
Arrangement for reducing the aerodynamic noise at the leading edge of a passenger aircraft wing
Dispositif pour la réduction du bruit aérodynamique au bord d'attaque d'un avion de transport

(30) Priorität: 17.04.2000 DE 10019185
(43) Veröffentlichungstag der Anmeldung: 24.10.2001
(73) Patentinhaber: Airbus Deutschland GmbH, 21129 Hamburg (DE)
(72) Erfinder: Gleine, Wolfgang, Dr.-Ing., 21255 Kakenstorf (DE); Mau, Knut, Dipl.-Ing., 22339 Hamburg (DE); Carl, Udo, Prof. Dr.-Ing., 21077 Hamburg (DE)
(74) Vertreter: Hansmann, Dierk, Dipl.-Ing.

(56) Entgegenhaltungen:
- EP-A- 1 057 723
- US-A- 3 128 966
- US-A- 3 711 039
- US-A- 5 865 400
- US-A- 6 015 115
- DOBRZYNSKI W ET AL: "AIRFRAME NOISE STUDIES ON WINGS WITH DEPLOYED HIGH-LIFT DEVICES" AIAA AEROACOUSTICS CONFERENCE, XX, XX, 2. Juni 1998 (1998-06-02), Seiten 1-17, XP001084583

## Beschreibung

Die Erfindung bezieht sich auf eine Anordnung zur aerodynamischen Lärmminderung von Vorflügeln eines Verkehrsflugzeuges gemäß dem Oberbegriff des Anspruchs 1. Mit ihr wird der aeroakustisch bedingte Gesamtlärm bei (modernen) Verkehrsflugzeugen, der (auch) während des Start- und Landeanfluges durch die Umströmung der Flugzeugstruktur entsteht, reduziert, wobei durch aerodynamische Maßnahmen am Vorflügel eine Lärmminderung umgesetzt wird.

Aeroakustisch bedingter Lärm bei Verkehrsflugzeugen, der (allgemein) durch die Umströmung der Flugzeugstruktur entsteht, wird ein zunehmend wichtiger Anteil des verursachten Gesamt-Fluglärms. Bei modernen Verkehrsflugzeugen entsteht dieser Fluglärm beispielsweise beim Landeanflug zu (grob eingeschätzt) etwa 50 % durch die Umströmung der Flugzeugstruktur, während die andere Hälfte des Lärmanteils durch die Triebwerke verursacht wird. Technische Fortschritte durch den Einsatz von vergleichsweise leiseren Triebwerken werden sich für den Gesamtlärmeindruck eines landenden Verkehrsflugzeuges nur dann voll auswirken, wenn gleiche Fortschritte zur Minderung des Umströmungslärms der Flugzeugzelle erzielt werden. Eine Verschärfung der Lärmgrenzwerte - Insbesondere bei Flughäfen mit hohem Verkehrsaufkommen - zeichnet sich bereits weltweit ab.

Daß die Fachwelt sich ernsthaft mit vorzusehenden Verbesserungen der Lärmminderung einer umströmten Flugzeugstruktur, insbesondere an der Tragwerkstruktur im Vorflügelbereich, befasst, darüber gibt eine vom "American Institute of Aeronautics and Astronautics" publizierte Studie der Herren Dobrzynski und Gehlhar eine entsprechende Auskunft [Wemer Dobrzynski, Burkhard Gehlhar: "Airframe Noise Studies on Wings with Deployed High-Lift Devices"; Deutsches Zentrum für Luft und Raumfahrt e. V. (DLR), Institul für Entwurfsaerodynamik, Abteilung Technische Akustik, Forschungszentrum Braunschweig, Germany; 4th AIAA/CEAS Aeroacoustics Conference; June 2-4, 1998 /Toulouse, France]. In dieser Studie wird unter anderem auf eine Lösung eingegangen, nach der am Innenbereich (am rückwärtigen Profilbereich) eines Vorflügels, der sich in Richtung des Hauptflügels aufspannt, ausgangs der Profilwötbung ein vorflügelbefestigtes Leitblech (gelenkbeweglich) angeordnet ist, das (sinnvollerweise) an den Vorflügel angelenkt und eingeschwenkt wird. Durch diese Maßnahme verspricht man sich, den Geräuschpegel während des Starts und der Landung eines Flugzeuges zu verringern. Für den Reiseflug des Flugzeuges wird dann das Leitblech an den Vorflügel angelenkt. Es mag sein, dass man entsprechende Geräuschminderungen im Windkanal erfolgreich nachweisen kann, allerdings wird diese Lösung nach praktischen Erwägungen wohl kaum verwendet werden, weil sie so nicht umsetzbar ist. Im eingefahrenen Zustand des Vorflügels (Reisekonfiguration) mit entsprechend dem rückwärtigen Profilbereich (nach innen) geklapptem Leitblech ist kein ausreichender Platzvorhanden, um eine starre Konfiguration zu verstauen. Andererseits weist eine derartige flexible Trennfläche, die sich beim Einfahren der Innenkontur des Vorflügels anpasst, dann nicht genügend Festigkeit auf, um den durch die Luftströmung verursachten Kräften standzuhalten.

Von daher wird Flatterneigung mit dem Effekt einer Geräuschabstrahlung auftreten, die dem beabsichtigten Zweck entgegensteht. Ein angelenktes Blech wird zusätzliche mechanische bewegliche Teile erfordern, wodurch neben dem Anwachsen der Herstellungs- und Wartungskosten auch Gewichtserhöhungen auftreten werden. Der Übergang von der Vorflügelunterseite zu dem Gelenk der Trennfläche muss frei von Kontursprüngen und Schlitzen ausgebildet sein, wodurch sehr hohe Fertigungsgenauigkeiten erforderlich sind. Femerwird die vorgeschlagene Blech-Trennfläche erheblichen Wechselkräften, die von der Luftströmung initiiert werden, ausgesetzt sein. Da diese Trennfläche lediglich an der Unterkante des Vorflügels über das Gelenk befestigt wird und keine weiteren Versteifungen vorgesehen werden, besteht die Gefahr, dass diese Trennfläche zu Schwingungen angeregt wird. Da die Kontur der Slatrückseite wie auch die Geometrie des Luftspaltes sich über die Spannweite der Tragfläche ändert, müssten die Elemente dieser Trennfläche eine Verwindung / Schrägung bekommen, wodurch der Einklappmechanismus zusätzlich verkompliziert wird. Sehr kritisch wird die Situation eines Fehlerfalles, beispielsweise bei Blockade der Mechanik, bewertet, weil sich dann der Vorflügel nicht mehr einfahren lässt. Weil auch keine weiteren Hinweise oder Anregungen zum Abstellen dieser Nachteile (auch nicht andeutungsweise) vermittelt werden oder auf etwa weitere Verbesserungen (wenigstens andeutungsweise) hingewiesen wird, nach denen eine Geräuschminderung am Vorflügel durch anderweitige strömungsbegünstigende Maßnahmen, die gänzlich auf zusätzliche sich bewegende mechanische Elemente verzichten würden und außerdem eine optimale Anpassung an verschiedene Flugzustände umsetzen würden, erreicht wird, kann man bestenfalls die vorgeschlagene Lösung als Anregung zum Auffinden von verbesserten Lösungen auffassen, nach denen der Anteil des Vorflügellärms am Gesamtlärm von umströmten Flugzeugstrukturen der Verkehrsnugzeuge signifikant reduziert und in eine technisch und wirtschaftlich befriedigende Gesamtlösung umgesetzt wird.

Demzufolge liegt der Erfindung die Aufgabe zugrunde, eine Anordnung zur Minderung des aeroakustlschen Vorflugellärms bereitzustellen, mit der die Lärmentstehung am Vorflügel eines Verkehrsflugzeuges vermieden wird, ohne dass dle aerodynamischen Verhältnisse (Auftrieb, Widerstand) sich nachteilig verändern. Bei einem Ausfall der Anordnung dürfen keinesfalls gefährdenden Auswirkungen, die den Flug eines Verkehrsflugzeuges beelnflussen, auftreten. Dabei soll gänzlich auf zusätzliche sich bewegende mechanische Elemente und auf Elemente, die das Gesamtgewicht des Flugzeuges ungünstig beeinflussen, verzichten werden, wobei eine einfache Installation der (als Nachrüstlösung vorzusehenden) Anordnung und deren einfache Wartbarkeit angestrebt wird.

Diese Aufgabe wird durch die im Anspruch 1 angegebenen Maßnahmen gelöst. In den weiteren Ansprüchen sind zweckmäßige Ausgestaltungen dieser Maßnahmen angegeben.

Die Erfindung ist in einem Ausführungsbeispiel anhand der beigefügten Zeichnungen näher beschrieben. Es zeigen
- Fig. 1: einen an einen Hauptflügel angelenkten Vorflügel mit einem am rückwärtigen Profilbereich des Vorflügels befestigten hohlen Verdrängungskörper im komprimierten Zustand;
- Fig. 1A: einen Teilabschnitt der Fig. 1 mit vergrößerter Darstellung der Bleed-Air-Leitung;
- Fig. 2: der dem Hauptflügel ausgefahrene Vorflügel mit dem Verdrängungskörper im expandierten Zustand;
- Fig. 3: den Vorflügel nach Fig. 2 mit dem mehrere Kammern aufweisenden Verdrängungs-Körper;
- Fig. 4: das Strömungsbild des Hauptflügels mit dem ausgefahrenen Vorflügel (ohne Verdrängungskörper) und einer ausgefahrenen Landeklappe.

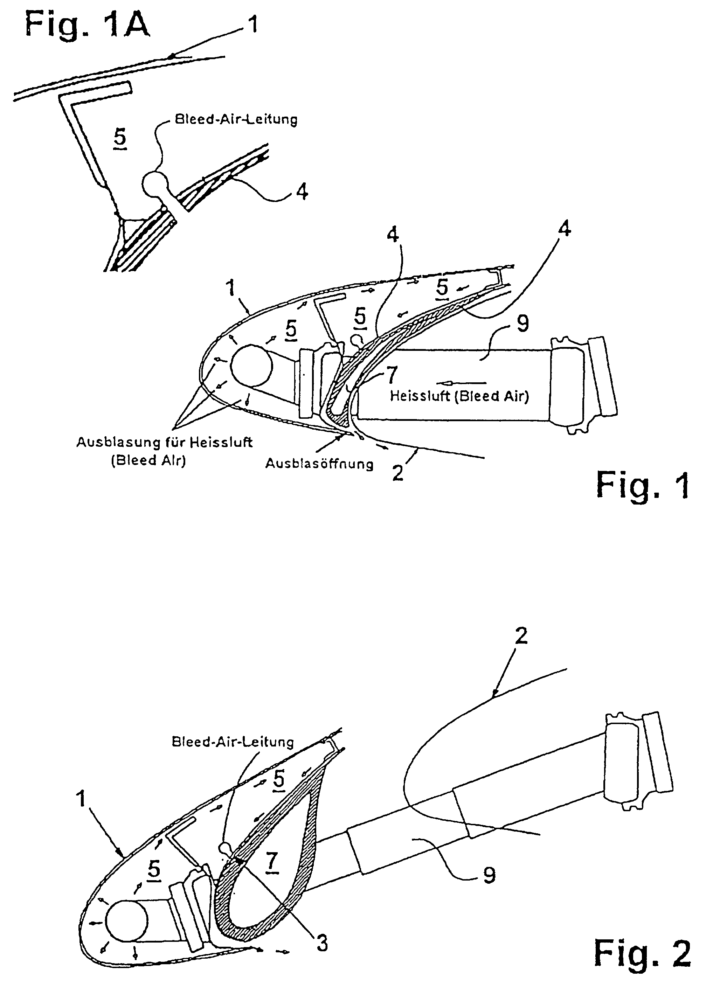

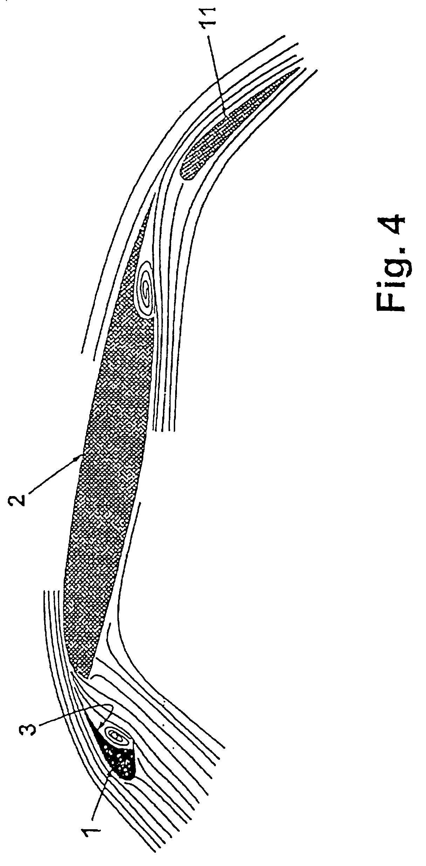

Um das Verständnis für die Situation der Lärmentstehung an der umströmten Tragwerkstruktur eines Verkehrsflugzeuges zu fördern, wird zunächst auf die Konfiguration nach der Fig. 4 näher eingegangen. In dieser Darstellung, aus welcher man die Tragwerkstruktur mit einem Hauptflügel 2, einem Vorflügel 1 und einer Landeklappe 11 erkennt, wobei der Vorflügel 1 und die Landeklappe 11 im (dem Hauptflügel 2) ausgefahrenen Zustand gezeigt werden, wird außerdem das Strömungsbild der diese aerodynamischen Strukturelemente umströmenden Luftschichten vermittelt. Bedingt durch diese bisher verwendete bauliche Form des Vorflügels 1, und nur darauf wird hier eingegangen, entsteht innerhalb der Profilwölbung 3, die in Vorflügel-Spannweitenrichtung die Form einer Hohlkehle besitzt, an der gewölbten Profiloberfläche ein parallel angeordneter Wirbel, dessen fluktuierendes Druckfeld offensichtlich die ungewünschte Lärmentstehung verursacht. Messungen im aeroakustischen Windkanal bestätigen, dass bei einer starren Verkleidung des vom Wirbel eingenommenen Raumes der vom Vorflügel 1 ausgehende Lärm mit den nachfolgend angegebenen Maßnahmen, die in keiner Flugsituation gefährdende Auswirkungen auf den Flug eines Verkehrsflugzeuges ausüben, deutlich reduziert wird. Durch die vorzusehenden lärmmindemden Maßnahmen am Vorflügel 1, die nachfolgend anhand der Figuren 1 bis 3 näher vorgestellt werden, wird erreicht, dass die aerodynamischen Eigenschaften. die auf den Auftrieb des Verkehrsflugzeuges und den aerodynamischen Widerstand bezogen werden, sich nicht ungünstig verändern, sondem im Gegenteil eher verbessert werden.

Aus den Figuren 1 bis 3 kann man ersehen, dass man zur Bewältigung der am Vorflügel 1 realisierten Lärmminderung einen Verdrängungskörper 4 einsetzt, der innerhalb der Profilwölbung 3 (also am Innenbereich respektive am rückwärtigen Profilbereich) des Vorflügels 1 an der gewölbten Profiloberfläche befestigt ist. Dort wird ein Verdrängungskörper 4 angeordnet, der ein hohler Körper ist, welcher sich (aufgrund von später näher erläuterten Maßnahmen) aufblasen lässt.

Der Verdrängungskörper 4 ist als aufblasbarer Hohlbalg ausgeführt, der mit einem elastischen dennbaren Material realisiert ist. Dessen Balghohlraum 7 ist über wenigstens eine geregelte Bleed-Air-Leitung, die im Hohlraum5 des Vorflügels 1 abschnittsweise angeordnet ist, mit dem Bleed-Air-System des Verkehrsflugzeuges verbunden. Aus der Fig. 1A kann man diese in Spannweitenrichtung des Vorflügels 1 verlegte druckbeaufschlagte Bleed-Air-Leitung, mit der eine von der Enteisung des Vorflügels 1 unabhängige Aufblasbarkeit des Verdrängungskörpers 4 umgesetzt wird, in einer vergrößerten Darstellung entnehmen.

Aufgrund seiner Lokalisierung am Vorflügel 1, seiner inneren Struktur, seines (eingesetzten) Materials, seiner funktionellen Eigenschaften und dem (generellen) Verzicht auf eine weitere Zwangsführung (Zwangspositionierung) des Verdrängungskörpers 4 durch eine zusätzliche Anlenkung (von) weiterer(en) aerodynamischer(en) Körper(n) an den Verdrängungskörper 4, der innerhalb dem von der Profilwölbung 3 eingeschlossenen Raum positioniert ist, wird die Vermeidung von Gefährdungen (ohne Restrisiko) während des Flugbetriebes - auch bei Unwirksamkeit bzw. Ausfall des Verdrängungskörpers 4 wegen Systemstörung - ausgeschlossen.

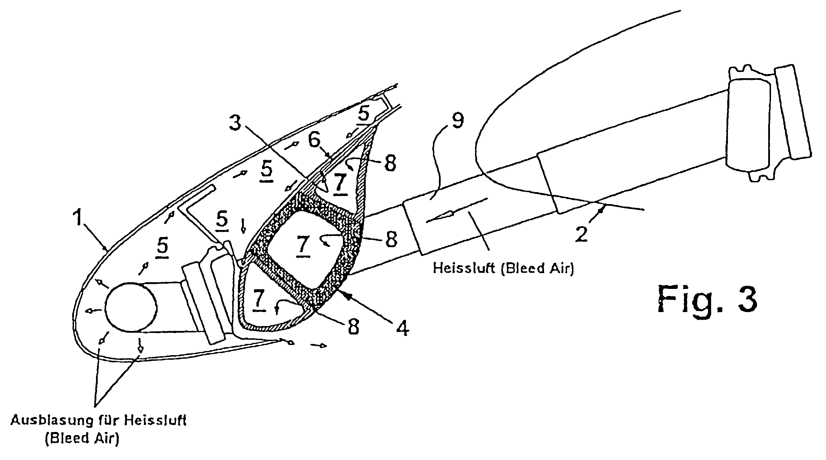

Dabei ist - wie erwähnt - dieser Verdrängungskörper 4 mit (beispielsweise nach den Figuren 1 und 2) einer geregelten Bleed-Air-Leitung, die im Hohlraum 5 des Vorflügels 1 abschnittsweise angeordnet ist, verbunden, von da aus dem Balghohlraum 7 die zum Aufblasen benötigte Druckluft, die die aerodynamische Form des Verdrängungskörpers 4 (des Hohlbalgs) verändert, eingespeist wird. Der Hohlraum 5 des Vorflügels 1 ist mit wenigstens der - im Teleskoprohr 9 geführten - Bleed-Air-Leitung verbunden, die einer Anzapfstelle im Bleed-Air-System angeschlossen ist. Diese Bleed-Air-Leitung. ist (nach den Figuren 1 und 2) mit dem Balghohlraum 7 oder aber (nach der Fig. 3) mit den Kammern 8 des (mit einem Mehrkammersystem versehenen) Verdrängungskörpers 4 verbunden, über die eine ventilgeregelte Versorgung von Druckluft aus dem Bleed-Air-System zum kontrollierten Aufblasen des Verdrängungskörpers 4 erfolgt.

Vorab der weiteren Ausführungen wird (zum tieferen Verständnis für die Arbeitsweise der vorgestellten Anordnung) erwähnt, dass der einzelnen Bleed-Air-Leitung wenigstens ein Abschaltventil und ein Druckregelventil (beide nicht gezeigt), die ihr nacheinander in Reihe geschalten sind, installiert ist. Der (nicht gezeigte) ventilintegrierte Regelteil dieser Ventile ist informationstechnisch mit einer (nicht gezeigten) Vorflügel-Konturen-Regeleinrichtung verbunden, von der aus diese Ventile über Informationsleitungen einzeln angesteuert werden. Es wäre denkbar, dass (dem Leitungsabschnitt von) der (in den Hohlraum 5 des einzelnen Vorflügels 1 geführten) Bleed-Air-Leitung eine flexible ausgleichsfähige Rohrverbindungs-Luftleitung angeschlossen ist. Letzteres kann durch das am Vorflügel 1 befestigte und längenbeweglich veränderliches Teleskoprohr 9, mit dem der Vorflügel 1 dem Hauptflügel 2 angelenkt oder ausgefahren wird, geführt sein. Dabei ist gewährleistet, dass diese. Rohrverbindungs-Luftleitung, die ausgangs (bzw. nachfolgend) der installierten Ventile der nehmlichen Bleed-Air-Leitung angeschlossen ist, mit der Anzapfstelle des Bleed-Air-Systems in Verbindung steht.

Zurückkommend auf die Fig. 1 erkennt man; dass der Freiraum, der sich zwischen dem Hauptflügel 2 und dem Ihm angelenkten einzeinen Vorflügel 1 aufspannt, mit einem im komprimierten Zustand befindlichen Verdrängungskörper 4 volumenmäßig ausgefüllt ist, dabei sich allenfalls eine (nicht unter Druck befindliche) Restluftmenge im Balghohlraum 7 befindet.

Die Körperform des im komprimierten Endstadium befindlichen Verdrängungskörpers 4 (Hohlbalgs) ist in dieser Situation dem Freiraum angepasst.

Anderenfalls ist - nach den Figuren 2 und 3 - der von der Profilwölbung 3 des Vorflügels 1 eingeschlossene Raum und der letzterem (Bereich) nahegelegene und ihm angrenzende Raum von einem im expandierten Zustand befindlichen Verdrangungskörper 4 volumenmäßig ausfüllt, dabei (nach der Fig. 2) der Balghohlraum 7 oder (nach der Fig. 3) die einzelne Kammer 8 mit (der vom Bleed-Air-System zugeführten) Druckluft gefüllt ist.

Die Körperform des Verdrängungskörpers 4, der während des Starts und während der Landung des Verkehrsflugzeuges vom Bleed-Air-System mit Druckluft (von einem Triebwerk oder der APU) geregelt aufgeblasen und vor dem völligen Einfahren des Vorflügels 1 druckentlastet wird, worüber noch näher informiert wird, ist im (durch vorbeschriebenes kontrolliertes Aufblasen des Verdrängungskörpers 4 beeinflußtes) Endstadium eine derartige, mit der die Wirbelbildung am Innenbereich des ausgefahrenen Vorflügels 1 reduziert oder verhindert wird, ohne den Maximalauftrieb des Verkehrsflugzeuges zu reduzieren.

Auf den Verdrängungskörper 4 näher eingehend - wird ergänzt, dass er ein dreidimensional dehnbarer Körper ist, der im Bereich der Profilwölbung 3 ganzflächig dem Innenbereich des Vorflügels 1 an der gewölbten Profiloberfläche aufgeklebt ist. Der Verdrängungskörper 4, der einen Hohlbalg verkörpert, ist mit einem weichen Balgmaterial realisiert, das im komprimierten und expandierten Zustand formstabil ist, welches sich durch kontrolliertes Luftaufblasen oder durch kontrolliertes Luftabsaugen oder anderweitige Maßnahmen der Luftreduzierung (Luftentweichung über ein der Verdrängungskörper-Wandung luftdicht eingepasstes Luftauslassventil) auf eine gewünschte äußere Balgkontur verändern lässt.

Nach der Fig. 3 ist der Balghohlraum 7 des Verdrängungskörpers 4 mit einem Mehrkammersystem versehen, wobei dann die Bleed-Air-Leitung (über ihr abgezweigte Stichleitungen) der einzelnen Kammer 8 verbunden ist. Es wäre denkbar, dass der vertikal positionierte Kammertrennwandbereich der einzelnen Kammer 8, der den Hohlraum 7 des Verdrängungskörpers 4 (des Hohlbalgs) in mehrere Kammern 8 unterteilt, mit einer überdruckausgleichenden Kammeröffnung versehen ist.

Die Wandstärke des Verdrängungskörpers 4 ist derart dimensioniert, wonach sie Im druckbeaufschlagten Zustand der einzelnen Kammer(n) 8 unter dem Einfluß eines definierten Kammerinnendruckes die gewünschte Außenkontur des Verdrängungskörpers 4 einstellen wird.

Auf dem Außenbereich der Wandung des Verdränguhgskörpers 4 (des Hohlbalgs) ist zumindestens im nicht an der gewölbten Profiloberfläche der Profilwölbung 3 des Vorflügels 1 befestigten Bereich eine aus abriebfestem Material bestehende Schicht (fest anhaftend) angeordnet.

Es kann sein, dass auf dem Außenbereich der Wandung des Verdrängungskörpers 4 ein hochfestes Gewebe geschichtet wird, das beim Luftaurblasen oder beim Luftabsaugen oder bei anderweitigen Maßnahmen der Luftreduzierung des Verdrängungskörpers 4 (des Hohlbalgs) die Dehnungs- und Schrumpffunktion einer Membrane umsetzt.

An der gewölbten Profiloberfläche der Profilwölbung 3 des Vorflügels 1 sind auf dem Innenbereich von einem (beispielsweise) Innersten Außen-Vorflügel und / oder von einem Innen-Vorflügel verschiedenartig dimensionierte Verdrängungskörper 4 (Hohlbälge), die in keiner Figur dargestellt sind, mit unterschiedlichem Luftaufnahmevermögen und abweichendem Dehnungsverhalten ganzflächig geklebt, die im aufgeblasenen Zustand - aufgrund der Flügelzuspitzung der beiden Hauptflügel 2 am Verkehrsflugzeug - unterschiedliche Abmessungen der Verdrängungskörper-Geometrie umsetzen.

Mit einer Zusammenfassung wird verdeutlicht, dass innerhalb der Profilwölbung 3 (also am Innenbereich respektive am rückwärtigen Profilbereich) des Vorflügels 1 an der gewölbten Profiloberfläche ein aufblasbarer Verdrängungskörper 3 (Hohlbalg aus elastischem Material) befestigt ist, der- nach den Figuren 2 und 3 - im aufgeblasenen Zustand eine solche Form einnimmt, dass die (in der Fig. 4 - ohne Verdrängungskörper 4 dargestellte) Wirbelbildung (für diesen Bereich) reduziert oder ganz vermieden wird, ohne den Maximalauftrieb zu vermindern. Die Energie zum Aufblasen des Verdrängungskörpers 4 wird in Form von Druckluft (Zapfluft) über Ventile dem Bleed-Air-System entnommen. Der Verdrängungskörper 4 (der Hohlbalg) wird beim Ausfahren der (des) Vorflügel(s) 1 für Start und Landung kontrolliert aufgeblasen und vor dem völligen Einfahren der (des) Vorflügel(s) 1 wieder druckentlastet, so dass sich das weiche (Balg-)Material zusammendrücken lässt und sich zwischen die Struktur von beweglichem Vorflügel 1 und festem Hauptflügel 2 im eingefahrenen Zustand anschmiegt. Nach der vorgestellten Lösung für den formstabilen, auf eine gewünschte Kontur (kontrolliert) aufblasbaren Verdrängungskörper 4 variiert dessen Wandstärke im drucklosen Zustand (Halbzeugform) derweise, dass unter einem (oder auch mehreren) definierten Innendruck (Innendrücken) sich die gewünschte(n) Außenkontur(en) ergibt (ergeben). Der Verdrängungskörper 4 (Hohlbalg) kann auch aus einem Mehrkammersystem bestehen, um die Endkontur zu gewährleisten. Er kann vorzugsweise auf seiner freien Oberfläche, die im Einsatzfall umströmt wird, mit einem abriebfesten Material versehen sein, um den elastachen Verdrängungskörper 4 (Balgkörper) vor mechanischen Beschädigungen und aggressiven Stoffen aus der Umgebung zu schützen und so einer vorzeitigen Alterung vorzubeugen.

Diese Beschichtung kann beispielsweise aus einem hochfesten Gewebe bestehen, das sich beim Aufblasen des Verdrängungskörpers 4 (Hohlbalges) wie eino Membrane verhält und die gewünschte Konturengenauigkeit des Balgs im aufgeblasenen Zustand erhöht und gleichfalls den Verdrängungskörper 4 (Hohlbalg) gegen Platzen bei zu hohem Innendruck, beispielsweise infolge von Systemfehlem, schützt. Die Abstimmung von Verdrängungskörper-Material (Balgmaterial), Körpergeometrie, Körperinnendruck sowie Oberflächengewebe geschieht dermaßen, dass der aufgeblasene Balg formstabil und ohne Flattern Druckschwankungen der Spaltströmung standhält.

Der Verdrängungskörper 4 (Hohlbalg) wird ganzflächig in den Vorflügel 1 (Slat) eingeklebt, wodurch auf zusätzliche bewegliche (ihm angelenkle) Teile, die ohnehin eine hohe Gefährdung für den Flugbetrieb darstellen und hinderlich bleiben, verzichtet wird. Der Verdrängungskörper 4 (Hohlbalg) nach der Fig. 3 gewährt eine entsprechende Formvariation (optimale Anpassung an verschiedene Flugzustände) durch die Drucksteuerung des Mehrkammer-formkörpers, daher ist er auch zur aerodynamischen Widerstandsoptimierung einsetzbar.

### Bezugszeichen

- 1: Vorflügel
- 2: Hauptflügel
- 3: Profilwölbung (des Vorflügels 1)
- 4: Verdrängungskörper; Hohlbalg
- 5: Hohlraum (des Vorflügels 1)
- 7: Balghohlraum (des Verdrängungskörpers 4)
- 8: Kammer (des Verdrängungskörpers 4)
- 9: Teleskoprohr
- 11: Landeklappe

## Patentansprüche

1. Anordnung zur aeroakustischen Lärmminderung von Vorflügeln eines Verkehrsflugzeugen, bei der der Innenbereich von einem Vorflügel (1), der beweglich an einen Hauptflügel (2) angelenkt oder diesem ausgefahren wird, eine (im ausgefahrenen Zustand sichtbare) der Außenkontur des Hauptflügels (2) angepasste Profilwölbung (3) aufweist, welche in Vorflügel-Spannweitenrichtung die Form einer Hohlkehle besitzt und
innerhalb der Profilwölbung (3) ein an der gewölbten Profiloberfläche befestigter Verdrängungskörper (4) angeordnet ist, **dadurch gekennzeichnet daß** der Verdrängungskörper (4) hohl ausgebildet ist und der ohne weitere Zwangsführung durch Anlenkung (von) weiterer(en) aerodynamischer(en) Körper(n) innerhalb dem von der Profilwölbung (3) eingeschlossenen Raum positioniert ist und mit wenigstens einer geregelten Bleed-Air-Leitung, die im Hohlraum (5) des Vorflügels (1) abschnittsweise angeordnet ist, verbunden ist.

2. Anordnung nach Anspruch 1, **dadurch gekennzeichnet, dass** der Verdrängungskörper (4) ein zweidimensional dehnbarer Körper ist, der im Bereich der Profilwölbung (3) ganzflächig dem Innenbereich des Vorflügels (1) an der gewölbten Profiloberfläche geklebt ist.

3. Anordnung nach Anspruch 1, **dadurch gekennzeichnet, dass** der Freiraum, der sich zwischen dem Hauptflügel (2) und dem ihm angelenkten einzelnen Vorflügel (1) aufspannt, mit dem im komprimierten Zustand befindlichen Verdrängungskörper (4) volumenmäßig ausgefüllt ist. anderenfalls der von der Profilwölbung (3) des Vorflügels (1) eingeschlossene Raum und der letzterem nahegelegene und ihm angrenzende Raum von dem im expandierten Zustand befindlichen Verdrängungskörper (4) volumenmäßig ausfüllt ist.

4. Anordnung nach Anspruch 1, **dadurch gekennzeichnet, dass** der Verdrängungskörper (4) ein aufblasbarer Hohlbalg ist, der mit einem elastischen dehnbaren Material realisiert ist, dabei der Balghohlraum (7) über die geregelte Bleed-Air-Leitung mit einem Bleed-Air-System verbunden ist.

5. Anordnung nach den Ansprüchen 1, 3 und 4, **dadurch gekennzeichnet, dass** die Körperform des Verdrängungskörpers (4), der während des Starts und während der Landung des Verkehrsflugzeuges vom Bleed-Air-System über die ventilgeregelte Bleed-Air-Leitung mit der Druckluft aufgeblasen und vor dem völligen Einfahren des Vorflügels (1) druckentlastet wird, im durch kontrolliertes Aufblasen beeinflußten Endstadium eine derartige ist, mit der die Wirbelbildung am Innenbereich des ausgefahrenen Vorflügels (1) reduziert oder verhindert wird, dessen Körperform im komprimierten Endstadium eine derartige ist, die dem Freiraum angepasst ist.

6. Anordnung nach Anspruch 4, **dadurch gekennzeichnet, dass** der Hohlbalg mit einem weichen Balgmaterial realisiert ist, das im expandierten Zustand formstabil ist, welches sich durch kontrolliertes Luftaufblasen und durch kontrolliertes Luftabsaugen oder durch anderweitige Maßnahmen der Luftreduzierung auf eine gewünschte äußere Balgkontur verändern lässt.

7. Anordnung nach den Ansprüchen 1 und 4, **dadurch gekennzeichnet, dass** der Balghohlraum (7) des Verdrängungskörpers (4) mit einem Mehrkammersystem versehen ist, dabei jede einzelne Kammer (8) einer jeweils einzeln geregelten Bteed-Air-Leitung verbunden ist.

8. Anordnung nach Anspruch 7, **dadurch gekennzeichnet, dass** der vertikal positionierte Kammertrennwandbereich der einzelnen Kammer (8), der den Hohlraum (7) des Verdrängungskörpers (4) in mehrere Kammem (8) unterteilt, mit einer überdruckausgleichenden Kammeröffnung versehen sind.

9. Anordnung nach den Ansprüchen 1, 4 und 7 **dadurch gekennzeichnet, dass** die Wandstärke des Verdrängungskörpers (4) in der Dicke variierend gestaltet ist, wonach sich unter dem Einfluß eines definierten Kammerinnendruckes die gewünschte Außenkontur des Verdrängungskörpers (4) einstellen wird.

10. Anordnung nach den Ansprüchen 1 und 2, **dadurch gekennzeichnet, dass** auf dem Außenbereich der Wandung des Verdrängungskörpers (4) zumindestens im nicht an der gewölbten Profiloberfläche der Profilwölbung (3) befestigten Bereich eine aus abriebfestem Material bestehende Schicht (fest anhaftend) angeordnet ist.

11. Anordnung nach den Ansprüchenl, 4, 6 und 10, **dadurch gekennzeichnet, dass** auf dem Außenbereich der Wandung des Verdrängungskörpers (4) ein hochfestes Gewebe geschichtet ist, das beim Luftaufblasen oder beim Luftabsaugen oder bei anderweitigen Maßnahmen der Luftreduzierung des Verdrängungskörpers (4) die Dehnungs- und Schrumpffunktion einer Membrane umsetzt.

12. Anordnung nach den Ansprüchen 1, 2 und 4, **dadurch gekennzeichnet, dass** an der gewölbten Profiloberfläche der Profilwölbung (3) ganzflächig auf dem Innenbereich von einem innersten Außen-Vorflügel und / oder von einem Innen-Vorflügel verschiedenartig dimensionierte Verdrängungskörper (4) unterschiedlichen Luftaufnahmevermögens und unterschiedlichen Dehnungsverhaltens geklebt sind, die im aufgeblasenen Zustand - aufgrund der Flügelzuspitzung der beiden Hauptflügel (2) am Verkehrsflugzeug - unterschiedliche Abmessungen der Verdrängungskörper-Geometrie umsetzen.

13. Anordnung nach den Ansprüchen 1, 4 und 7, **dadurch gekennzeichnet, dass** einer Anzapfstelle im Bleed-Air-System wenigstens eine Bleed-Air-Leitung angeschlossen ist, die mit dem Balghohlraum (7) oder mit den Kammern (8) des Verdrängungskörpers (4) in Verbindung steht, über die eine ventilgeregelte Versorgung von Druckluft aus dem Bleed-Air-System zum kontrollierten Aufblasen des Verdrängungskörpers (4) erfolgt.

14. Anordnung nach den Ansprüchen 1, 4 und 13, **dadurch gekennzeichnet, dass** der einzelnen Bleed-Air-Leitung wenigstens ein Abschaltventil und ein Druckregelventil, die nacheinander in Reihe geschalten sind, installiert ist, deren ventilintegrierter Regelteil informationstechnisch mit einer Vorflügel-Konturen-Regeleinrichtung vertunden ist, von der aus die Ventile über Informationsleitungen einzeln angesteuert werden.

## Claims

1. Device for the aeroacoustic noise reduction of leading-edge slats of a commercial aircraft in which the inner zone of the slat (1), which is movably articulated to a main wing (2) or is extended therefrom, has a curved profile (3) adapted to the outer contour of the main wing (2) (and visible in the extended state), which curved profile (3) has the shape of a channel in the wing-span direction of the slat, and a displacement body (4) fixed to the curved profile surface is arranged inside the curved profile (3), **characterised in that** the displacement body (4) is hollow and is positioned within the space enclosed by the curved profile (3) without further positive guidance by the articulation of (by) further aerodynamic bodies and is connected to at least one controlled bleed air line which is arranged in sections in the cavity (5) of the slat (1).

2. Device according to claim 1, **characterised in that** the displacement body (4) is a two-dimensionally expandable body which, in the region of the curved profile (3), is bonded to the full area of the inner zone of the slat (1) on the curved profile surface.

3. Device according to claim 1, **characterised in that** the clearance which opens between the main wing (2) and the individual slat (1) articulated thereto is volumetrically filled by the displacement body (4) in the compressed state, and otherwise the space enclosed by the curved profile (3) of the slat (1) and the space proximate to and adjoining the latter is volumetrically filled by the displacement body (4) in the expanded state.

4. Device according to claim 1, **characterised in that** the displacement body (4) is an inflatable sac made of expandable elastic material, the sac cavity (7) being connected to a bleed air system via the controlled bleed air line.

5. Device according to claims 1, 3 and 4, **characterised in that** the shape of the displacement body (4), which is inflated with compressed air during takeoff and landing of the commercial aircraft by the bleed air system via the valve-controlled bleed air line and is depressurised before the full retraction of the slat (1), is such, in the final stage influenced by controlled inflation, that vortex formation on the inner zone of the extended slat (1) is reduced or prevented, and in the compressed final stage is such as to be adapted to fit the clearance.

6. Device according to claim 4, **characterised in that** the sac is made of a soft material which is dimensionally stable in the expanded state, and which can be modified to a desired outer sac contour by controlled inflation with air and by controlled extraction of air by suction or by other air-reducing measures.

7. Device according to claims 1 and 4, **characterised in that** the sac cavity (7) of the displacement body (4) is provided with a multi-chamber system, each individual chamber (8) being connected to an individually-controlled bleed air line.

8. Device according to claim 7, **characterised in that** the vertically positioned chamber-separating wall zone of the individual chamber (8), which subdivides the cavity (7) of the displacement body (4) into a plurality of chambers (8), is provided with a chamber opening which equalises excess pressure.

9. Device according to claims 1, 4 and 7, **characterised in that** the wall thickness of the displacement body (4) is configured variably, whereby the desired outer contour of the displacement body (4) will be established under the influence of a defined internal chamber pressure.

10. Device according to claims 1 and 2, **characterised in that** a (firmly adhering) layer of wear-resistant material is arranged on the outer portion of the wall of the displacement body (4), at least in the zone which is not attached to the curved surface of the curved profile (3).

11. Device according to claims 1, 4, 6 and 10, **characterised in that** a high-strength textile is laminated on to the outer portion of the wall of the displacement body (4), which textile reproduces the expansion and shrinkage function of a membrane during inflation with air or removal by suction of air or other air-reducing measures applied to the displacement body (4).

12. Device according to claims 1, 2 and 4, **characterised in that** differently dimensioned displacement bodies (4) having different air-receiving capacities and different expansion behaviour are bonded to the full area of the inner portion of an innermost outer slat and/or of an inner slat, on the curved surface of the curved profile (3), which displacement bodies (4) in the inflated state reproduce the different dimensions of the displacement body geometry resulting from the tapering of the two main wings (2) of the commercial aircraft.

13. Device according to claims 1, 4 and 7, **characterised in that** at least one bleed air line is connected to a tapping point in the bleed air system, which bleed air line is connected to the sac cavity (7) or to the chambers (8) of the displacement body (4) and through which bleed air line compressed air is supplied in a valve-controlled manner from the bleed air system for controlled inflation of the displacement body (4).

14. Device according to claims 1, 4 and 13, **characterised in that** at least one cut-off valve and a pressure control valve connected in series one after the other are installed in the individual bleed air line, the integrated control element of which valves is connected by information technology to a slat contour control device from which the valves are individually activated via information lines.

## Revendications

1. Système de réduction aéro-acoustique du bruit de becs de bord d'attaque d'un avion de tourisme, dans lequel le segment intérieur d'un bec de bord d'attaque (1) articulé de manière mobile contre une aile principale (2) ou extrait de cette aile présente une flèche de courbure du profil (3) adaptée au contour extérieur de l'aile principale (2), dans lequel la courbure a, dans la direction d'écartement du bec de bord d'attaque, la forme d'une cannelure et dans lequel un corps de déplacement (4) fixé contre la surface de profil voûtée a été disposé dans la courbure de profil (3), **caractérisé en ce que** le corps de déplacement (4) est creux, a été disposé dans l'espace délimité par la courbure de profil (3), sans guidage forcé et par articulation de corps aérodynamique supplémentaires et a été raccordé à au moins une liaison d'air soutiré réglée et disposée en partie dans l'espace creux (5) du bec de bord d'attaque (1).

2. Système selon la revendication 1, **caractérisé en ce que** le corps de déplacement (4) est un corps extensible sur deux dimensions et collé, dans la zone de la courbure de profil (3), contre la surface de profil incurvée, sur toute la surface du segment interne du bec de bord d'attaque (1).

3. Système selon la revendication 1, **caractérisé en ce que** l'espace libre qui s'étend entre l'aile principale (2) et le bec de bord d'attaque unique (1) qui s'appuie contre elle a été rempli avec le corps de déplacement (4) à l'état comprimé, en fonction du volume, et **en ce que**, à défaut, l'espace délimité par la courbure de profil (3) du bec de bord d'attaque (1) et l'espace situé à proximité du premier espace et attenant à ce dernier ont été remplis avec le corps de déplacement (4) à l'état expansé, en fonction du volume.

4. Système selon la revendication 1, **caractérisé en ce que** le corps de déplacement (4) est un soufflet creux et gonflable conçu avec un matériel élastique et extensible, l'espace creux du soufflet (7) ayant été raccordé à un système d'air soutiré, par l'intermédiaire de la liaison d'air soutiré réglée.

5. Système selon les revendications 1, 3 et 4, **caractérisé en ce que** le corps de déplacement (4), qui, pendant le décollage et l'atterrissage de l'avion de tourisme, est chargé d'air comprimé par le système d'air soutiré, via la liaison d'air soutiré réglée par soupapes et qui, avant le renfoncement total du bec de bord d'attaque, est décompressé, présente une forme qui, dans la phase finale influencée par le gonflage contrôlé, réduit ou entrave la formation de turbulences contre la zone intérieure du bec de bord d'attaque (1) et qui, dans la phase finale comprimée, est adaptée à l'espace libre.

6. Système selon la revendication 4, **caractérisé en ce que** le soufflet creux a été conçu avec un matériau de soufflet tendre, qui ne se déforme pas à l'état expansé et qui, par injection et aspiration d'air contrôlées ou par d'autres mesures de réduction de l'air, peut former un contour extérieur de soufflet souhaité.

7. Système selon les revendications 1 et 4, **caractérisé en ce que** l'espace creux du soufflet (7) du corps de déplacement (4) st doté d'un système à chambres multiples, chaque chambre (8) ayant été raccordée à une liaison d'air soutiré réglée individuellement.

8. Système selon la revendication 7, **caractérisé en ce que** la zone de la paroi de délimitation positionnée verticalement de la chambre (8), qui divise l'espace creux (7) du corps de déplacement (4) en plusieurs chambres (8), est dotée d'une ouverture de chambre compensant la surpression.

9. Système selon les revendications 1, 4 et 7, **caractérisé en ce que** l'épaisseur des parois du corps de déplacement (4) varie en fonction de l'épaisseur, permettant ainsi de régler le contour extérieur souhaité du corps de déplacement, sous l'influence d'une pression bien définie à l'intérieur de la chambre.

10. Système selon les revendications 1 et 2, **caractérisé en ce qu'**une couche constituée d'un matériau résistant au frottement a été disposée (avec adhérence ferme) sur le segment externe de la paroi du corps de déplacement (4), au moins dans le segment non fixé à la surface de profil incurvée de la courbure de profil (3).

11. Système selon les revendications 1, 4, 6 et 10, **caractérisé en ce qu'**un tissu très résistant a été empilé sur le segment extérieur de la paroi du corps de déplacement (4), tissu qui, lorsqu'on insuffle ou aspire dé l'air ou lors d'autres mesures de réduction de l'air du corps de déplacement (4), réalise la fonction d'extension et de rétrécissement d'une membrane.

12. Système selon les revendications 1, 2 et 4, **caractérisé en ce que** des corps de déplacement (4) dimensionnés différemment, avec une capacité de réception d'air et un comportement expansif différents, et réalisant, à l'état gonflé - sur la base de l'effilement des deux ailes principales (2) contre l'avion de tourisme, des dimensions différentes de la géométrie du corps de déplacement, ont été collés contre la surface de profil incurvée de la courbure de profil (3), sur toute la surface du segment intérieur du bec de bord d'attaque le plus intérieur et / ou d'un bec de bord d'attaque intérieur.

13. Système selon les revendications 1, 4 et 7, **caractérisé en ce qu'**au moins une liaison d'air soutiré raccordée à l'espace creux du soufflet (7) ou aux chambres (8) du corps de déplacement (4) et assurant un approvisionnement réglé par soupapes de l'air comprimé à partir du système d'air soutiré de gonflage contrôlé du corps de déplacement a été raccordé à un point de soutirage situé dans le système d'air soutiré.

14. Système selon les revendications 1, 4 et 13, **caractérisé en ce que** au moins une vanne marche-arrêt et une vanne de régulation de pression raccordées en série, les unes après les autres, et dont la partie de réglage intégrée aux soupapes a été raccordée par des techniques informatiques à un dispositif de réglage des contours du bec de bord d'attaque à partir duquel les vannes sont contrôlées séparément via des lignes d'informations, ont été raccordées à la liaison d'air soutiré unique.
